# EUROPEAN PATENT APPLICATION

(11) **EP 1 162 581 A1**
(43) Date of publication of application: **12.12.2001**
(21) Application number: 00304816.2
(22) Date of filing: 07.06.2000
(51) Int. Cl.: G07F 7/10

(54) **Secure payment card and system with apparatus for remote authentication**

(71) Applicant: Gardner, Richard Mervyn, Chelwood Gate, East Sussex R417 7LE (GB)
(72) Inventor: Gardner, Richard Mervyn, Chelwood Gate, East Sussex R417 7LE (GB)

(57) **Abstract**

A payment card (1) and payment card system in which all transactions are capable of authentication and validation by a central computer (41) by virtue of a variable personal identification number which is an inherent part of the transaction process, either by being required as confirmation of a transaction or as a part of the payment card (1) number itself, such identification number being determined by various means and characterised by the fact that it is determined by the cardholder and confirmed by a computer database, and by the fact that the identification number may not be reused for a subsequent transaction, thereby providing for an increase in the security of payment card (1), especially Internet and other remote transactions.

## Description

The present invention relates to a secure credit/debit/charge card and the like, and to a secure system using such cards. The term "payment card" will hereafter be used to mean all such cards.

Existing payment cards are identified by a name and account number, which are embossed on the card, and also recorded on a magnetic strip on the card for reading by a "swipe reader". A merchant will generally verify that the card may be used for a transaction by checking with his own bank (the "Acquiring Bank") that the card has a valid name and account number combination and by checking the signature of the cardholder with the signature endorsed on the reverse of the card.

For certain Credit and Charge card transactions (determined variously by the size of the transaction, the area in which the transaction takes place or the type of transaction) the merchant will require to be connected via the Acquiring Bank to the Issuing Bank's computer for on-line clearance of the transaction, and this is routine in some countries for all credit and charge card transactions.

Most debit card transactions will be verified on-line i.e. by direct connection through to the Issuing Bank, as are all ATM transactions.

Customarily, there is also a fixed four digit PIN (personal identification number), which the cardholder remembers. This is used for certain specific transactions e.g. where a user's signature cannot be checked, such as for cash withdrawals from an ATM machine.

A major concern with existing payment cards is fraud. Due to the fact that existing cards rely for their security primarily on the combination of the cardholder's name, account number and signature (all of which are readily ascertainable from both normal use and covertly), fraudulent use of cards, and their fraudulent replication, is a significant problem. This is despite on-line verification in many cases and despite additional internal computer checks on usage patterns which may be made.

At present, there are a number of ways in which card fraud may occur:
(i) Totally fake cards can be produced with fake numbers. These are of limited use, e.g. at outlets without swipe machines and which instead merely take an impression of the card.
(ii) Fake cards can be produced which replicate genuine names and their account numbers. The numbers may for example be obtained from discarded transaction slips, information from rogue merchants, lost or stolen cards, or may be intercepted from a telephone or electronic transaction, e.g. intercepted by a hacker from a remote merchant's database.
(iii) Lost cards can be used by forging the signature.
(iv) Cards may be intercepted prior to first delivery and signed with an incorrect signature before use.
(v) in remote use (Internet, telephone or mail order) an actual card is not necessary, and fake or genuine numbers may succeed in a remote purchase

"Smartcards", which incorporate an Integrated Circuit Chip are an attempt to address these problems by providing a regime where the Smartcard itself may be verified both as to being genuine and as being properly used by the person presenting the Smartcard for payment without the need for going on-line (which is neither economic nor practicable in many countries of the world). Certain transactions, because of their size or nature, would still require on-line authorisation.

However, the introduction of Smartcards for general payment use has been the subject of delay, both in issuing cards and in upgrading the merchants' card-reading machines to deal with the new technology, and the methods whereby the person presenting the Smartcard is authenticated remain under review.

Remote transactions present additional problems in that not only is the signature incapable of verification but also the physical properties of the card, or even its actual possession, cannot be checked. For example, copied card details may be used fraudulently, without the necessity of stealing the card itself.

From a study of papers on the Internet concerning remote payment methods, it is thought that fear of fraud has resulted in a marked reluctance to use payment cards on the Internet or for other remote transactions, and the lack of payment methods perceived to be secure is probably the major inhibiting factor restricting the growth of e-commerce. Furthermore, Debit cards are not presently used for remote transactions as first the protection afforded by the Consumer Credit Act do not apply and secondly it is the cardholders' own money, rather than the credit companies', which is potentially at risk.

A final problem for remote transactions is that even though a transaction may be authorised i.e. it may proceed, this is not the same as authentication of the cardholder i.e. the transaction could still be fraudulent or disputed and the merchant have to repay any credit gained.

The present invention aims to provide a secure payment card and card system which may be used to overcome the above mentioned problems by providing for the authentication of the cardholder through the use of a personal identification number which varies in accordance with specific criteria. Although the system could be used in any situation, its principal use is likely to be where on-line checking facilities are readily available, if not an inherent part of the transaction process such as on the Internet, and in practice its likely application will be:-
[a] in a pre-Smartcard regime
   [i] for all forms of payment card where on-line authorisation is the current standard (e.g. most Debit cards and all ATM cards)
   and [ii] for other cards (credit cards and charge cards) where on-line authorisation is required in certain circumstances, for use in those circumstances by adding specific cardholder authentication to the transaction
[b] in conjunction with the roll-out of Smartcards, as the simplest and cheapest method of identifying a person as the authorised cardholder
[c] generally, for use as a remote authentication for all remote transactions where the cardholder is not present, by accessing either the Issuing Bank's computer or computer accounts maintained by Trusted Third Parties (TTP's) for authentication of the cardholder and subsequent transaction validation

Viewed from one aspect, the present invention provides a payment card and card system in which the payment card has associated therewith an account number and a plurality of possible verification codes the cardholder being required to provide one or more of the verification codes in order to verify a transaction, the codes which are available for use for a particular transaction varying in accordance with specific criteria.

These verification codes can be thought of as "variable PINs", and may comprise or be obtained from a set of numbers that the cardholder has on their person, for example on a piece of card which is the same size as the payment card and held in the cardholder's wallet or elsewhere.

The use of a plurality of possible verification codes allows for various possible security regimes to be implemented which can effectively and simply increase the security associated with a card transaction, without placing any significant extra burden on the cardholder.

The specific criteria may be known only to the cardholder and a central computer (whether belonging to the Issuing Bank or otherwise and hereafter taken to refer to whichever is appropriate) and may for example be time and/or action dependent. For example the same code might not be allowed to be used on two sequential transactions and/or for a set period of time or number of card uses after that particular code's first use. In such cases, after a code has been used once, it may then not be used again until one or more further transactions have occurred or until a set time period has elapsed, or at all.

The means of verifying that the codes are correct will of course vary with the system in use: for example, all non-Smartcard systems will depend upon on-line verification through to the central computer, whereas in Smartcard systems the codes may be verified by input of the codes either into the merchant terminal at point of sale or a personal computer connected to a Smartcard reader. The appropriate means of verification is assumed in the remainder of this application.

This regime immediate provides extra safety for the cardholder, since a trader provided with a verification code by a cardholder during verification of a transaction could not retain the number and fraudulently use it later without the probability that the particular code provided would not be valid. This is also true for a number intercepted over a telephone or on the Internet, or from a number derived from a discarded transaction slip (should it be printed thereon).

In one especially preferred form, and for added security, once a code has been used it may not be reused at all. Thus, viewed from a further aspect, the present invention provides a payment card and card system in which the payment card has associated therewith a plurality of possible verification codes, the cardholder being required to provide a verification code in order to verify a transaction, each code being usable only once.

In one preferred embodiment, the cardholder has both a fixed PIN which they remember and the variable codes.

In a preferred embodiment, the fixed PIN may be used with or as part of the verification code for verifying a transaction. For example, to verify a transaction, the cardholder may need to provide their fixed PIN or a portion of it, together with or as part of one of the possible verification codes.

Such a system would still have the advantages discussed above, with regard to a rogue trader or an interception of the number. Furthermore, should a cardholder be robbed or should they lose both their card and their codes, e.g. by losing their wallet, the robber or a finder of the wallet would not be able to use the card, since even though they may have the codes, they would not have the fixed PIN.

As a further or alternative protection against loss of the verification codes, the codes may be provided with a set of bogus or dummy codes elements, so that only the cardholder knows for certain which codes or code portions to use.

As a still further or alternative protection, the next code to be used, or a subset of the codes from which the next valid code may be picked, may be uniquely specified in a particular manner.

This would be advantageous over for example merely being able to use a code which was not used last, as an unauthorised user would be very unlikely indeed to pick such a uniquely specified code from all of those possible.

The particular code or subset that may be used next may be specified in a variety of different ways. For example, a number of codes may be used in a set series, or the code or a subset of codes to be used next may depend upon the day or month of use. Procedures could also be used which depend on a particular number known to or characterising the cardholder, e.g. an algorithm based on the cardholder's birth date or age. One could for example shift the day or other parameter by one or more days, and e.g. use verification codes associated with the shifted day rather with the current day. This shift would have been previously notified by the card issuer in order to agree the codes needed.

In one embodiment, a set of digits (and/or other suitable characters) may be provided for each day of the month, and all or some of these digits for a particular day may be used to produce a valid verification code for that day. Some or all of the digits for an adjacent day may also be used to produce the code. Alternatively, digits from a set of digits associated with the current day and with one or more other days on either or both sides of the current day may be chosen.

The digits may for example be provided in a table of rows and columns so that the cardholder can look up e.g. row 1 and column 4 for the digits for the 14^{th} day of a month.

In one preferred form, the digits derived from the day of the month are combined with the cardholder's PIN or with one or more digits from the PIN, e.g. two of the PIN digits, so as to provide the card verification code. These digits may or may not need to be consecutive and in the same order as in the PIN.

As a further modification, the cardholder may need to select further digits, together with the day digits and preferably PIN digits, which may comprise e.g. consecutive digits from any of the other digits apart from that particular day's digits.

A valid code may need to have the various elements making up the code (e.g. digits for the day and PIN digits) in a particular order. Alternatively, the positioning of the element may be irrelevant, or the various elements and their required order may be prompted by the central computer on-line.

When using a date as an indicator of the digits to use in the verification code, then the system may distinguish that the cardholder is in a different time zone, and may compensate accordingly, for example by determining where the call for verification originates. Alternatively, the cardholder may merely compensate by determining the date in their home country. As a further possibility, the digits for the current day plus one day either side thereof may be considered to be valid by the computer system, although the cardholder may be requested always to use the code associated with the current day for them.

When using e.g. a date to provide a set of valid digits in the verification code, the cardholder may have two tables or grids. On one grid/table, the date may provide an associated grid reference, and this reference may be used to look up a set of digits on the other grid/table to give the usable digits.

As a further method of obtaining the verification code, the cardholder may be provided with two sets of digits, and may chose digits from both in any suitable manner. For example, they may chose digits from one in accordance with the date and digits from the other randomly. Alternatively, the choice from both may be made randomly or according to the date or some other parameter. The chosen digits may also be combined with PIN digits.

In one preferred form, the codes are contained in a series of grids with provision for a unique verification code to be applied for each occasion of use, determined by the date, day of the week, month and use number on that day, being derived in part by specific numbers and in part by two or more indicated numbers from the fixed PIN.

The codes or digits, etc., for constructing the final verification codes, may be held by the cardholder in any suitable manner, and as said above, may be provided on a piece of card or plastic which may be e.g. of the same size as a credit card, so that it may be held in a wallet with the payment card.

The codes may be printed in such a manner that they may not be photocopied, and may be set out so as to facilitate the recognition of which codes or portions thereof may be used next, e.g. they may be set out in different colours and/or in sets to facilitate identification.

The codes could be stored electronically e.g. in a small electronic device that e.g. could be the size of a credit card and could have e.g. an LCD screen that may display all or part of the next code to use on pressing a button on the device or after entering a fixed PIN into the device, which device could include suitable microchip/processor for executing suitable software to provide the next code and if appropriate keep track of those already used.

Alternatively the LCD could show what the required input codes were (e.g. Weekday, Date, Month with selected PIN elements), in either a standard or random order for use with the Codes.

Instead of the codes being provided on a piece of card, etc., they may be provided on the back of a payment card itself. This would mean that should the card be handed over for payment, then the tradesman would have the card and variable numbers, if only for a brief period. The use of one or more of the safety precautions mentioned in this application could, however, ensure that this would not be a problem.

As an alternative, the codes could be provided on the back of the card itself but the grid determining which codes represented which date or day etc. might be affixed to another card such that the two together were necessary to ascertain a correct code input.

As a further alternative in connection with remote card usage, the codes may be entered into a personal computer for use either in connection with a linked Smartcard reader for verification of input codes, or merely as a convenient means of keeping track of codes used and the next to be used.

The cardholder may also not disclose the verification code to the tradesman, but may instead key in the code themselves, e.g. using a keypad especially provided for this.

As a further alternative, the codes for one (first) card could be provided on a second payment card.

This second payment card could be of the same kind as the first, in which case the first could provide the codes for the second card. They could be identical in that they have the same cardholder account number, or they could have different account numbers. Both cards may or may not have the same PIN's.

In a preferred embodiment, the second card could be a standard card as currently provided, which could for example include the cardholder's signature and be used conventionally as in current systems where security is not considered to be a particular problem, and/or by traders without electronic swipe machines and the like.

Such second cards may have a lower credit limit than the first card. The cardholder may also be able to load the second card with the first card, i.e. increase the limit on the second card by using the first. This increased limit may be set to a maximum limit and may last for only a set period of time, e.g. a few days.

The first card with the higher limit, unlike a conventional card, may be used only in conjunction with the correct authentication codes. It may be printed with a name and an account number, or with either one or with neither. In such a system, the first card would be used for all cardholder not present transactions where the details have anyway to be given manually or orally, together with the valid code, all such information being available from the verification codes which may be endorsed on the second card.

The verification codes may be of any suitable length. They may include both letters and numbers or be of any suitable characters so as to increase the possible combinations available.

In a preferred form, they are eight digits long, and e.g. comprise two of the PIN digits and two other sets of three digits determined by reference to the date and number of uses that day. In another preferred form, they are four digits long (probably the shortest consistent with reasonable security), and e.g. comprise two of the PIN digits and two other digits determined by reference to the date and number of uses that day: and in a further especially preferred form they are five characters long with three characters determined by reference to the Weekday, Day and Month (uniquely identifying the day thereby) and two from the PIN.

The cardholder's name may or may not be provided on the card, as the verification code is in itself sufficient identification. When there is no name embossed on the card, the card cannot be accidentally impressed by a tradesman without a swipe machine, and the trader knows that he must telephone for authorisation. Where no name is provided, the card may have an identification code on it, so that the cardholder knows that the correct card is being returned to him. This may take any suitable form, and may for example comprise the cardholder's initials and date of birth. An area may be provided on the card for the cardholder to put their own personal identification.

Where the card is used, e.g. over the telephone or on the Internet, the cardholder need not give their name, as the merchant need only confirm that the card is valid from the verification code, and that the merchant will be paid (e.g. by receipt of an authorisation code). In order to preserve this anonymity, the card issuer may provide central locations to which merchants can send bought goods, the card issuer then sending the goods from these locations to the cardholder.

Viewed from a further aspect, therefore, the present invention may provide a payment card and payment card system in which the card details do not identify the card user to the provider of goods purchased or services provided, and in which goods purchased using the card can be sent to a central receiving location, from where they are distributed to or collected by the card user. This could avoid the need for the user to give their name and address over e.g. the telephone or the Internet.

Viewed from a further aspect, the present invention provides a payment card system comprising a central clearing computer and one or more card reading terminals provided at remote locations and able to communicate with the central computer in order to verify the validity of cards read at the terminals, the system being characterised in that the central computer includes means for determining a plurality of valid codes for any one particular card, and requiring the code provided for a particular card to vary in accordance with specific criteria. The central computer may includes means for determining whether the verification code has been used before, and if it has, for rejecting the card.

Viewed from a still further aspect, the present invention provides a payment card and card system as above but in which of the large number of possible verification codes, a single unique and specific verification code is required to be input before a transaction is validated, such code either never being repeated or being repeated by chance only in random manner such that it could not be forecast or predetermined in any way.

Where a single unique verification code is demanded by the system for each and every occasion of use in the manner described above, which the cardholder is able to provide by virtue of the code card tables provided and in accordance with the rules suggested, it would be possible for the payment card number itself to include the verification code (if it were digital) or a set of digits derived therefrom (if it or part consisted of letters) for use in remote (Internet, telephone and mail order) transactions where a physical card was not used and the payment card number would have to be input in any event. Such a system, assuming the number were validated by the central computer, would result in authentication of the cardholder in a manner not presently possible.

The distinction between the required verification codes being digital or alphabetical is important in that where an alphabetical input is possible e.g. on a personal computer, an alphabetical input is preferable as it enables more combinations to be achieved without in any way increasing the memory requirement of the central computer. In some instances e.g. a telephone, alphabetical input having no distinction from digits bearing in mind the present telephone keypad limitations, then the input would then have to be digital.

If the input required was alphabetical, the central computer could, on a valid input, allot a number treated as derived therefrom and then forming part of the payment card number.

Thus, the cardholder would have the bank identification and his account numbers and would complete a valid payment card number with the required specific verification code determined either following the precise rules for its construction as already described, or alternatively after contact with the central computer to input the required verification codes, directly or in the order prompted by the central computer.

Under current protocols, such a number might be rejected as it might not conform to the algorithms used to check valid numbers: either this would be bypassed by direct confirmation between the merchant and the central computer, which would confirm the number or if adherence to the algorithm were mandatory, then prior contact with the central computer would be essential to add a further digit to the input validated verification code which would together with the bank and accounts numbers together make the complete number conform to the required algorithm.

Viewed therefore from a still further aspect, the present invention provides a payment card and card system having associated therewith numbers identifying the card issuer and the cardholder together with a plurality of possible verification codes set out in a series of grid tables issued by the card issuer and retained by the cardholder, the card holder being required to provide by input into a remote terminal connected to the card issuer's central computer one or more of the verification codes in order to verify a transaction, the verification code or codes which are valid on a particular occasion varying in accordance with specific criteria and including two or more specified numbers from a fixed PIN to be remembered by the cardholder, such verification code then forming together with the card issuer and account numbers, and possibly with the addition of a further digit to ensure that the whole conformed to a required numerical algorithm, a complete unique payment card number to be used by the cardholder for a transaction on that day.

In addition, further provision could be made for the resultant payment card number to be verified by the central computer on it being checked by a remote merchant in connection with it being used by the cardholder

Embodiments of the present invention will now be described, by way of example only and not by way of limitation, in accordance with the accompanying drawings in which:
**Fig. 1** is a front view of a payment card in accordance with one embodiment of the present invention;
**Fig. 2** is a rear view of the card of Fig 1;
**Fig. 3** is the view of a second card associated with the card of Fig. 1 in accordance with a first embodiment
**Fig. 4** is the view of a second card associated with the card of Fig. 1 in accordance with a second embodiment
**Fig. 5** is the view of a second card associated with the card of Fig. 1 in accordance with a third embodiment
**Fig. 6** is a diagram of a system using the card of Fig. 1 and verification codes shown at Figs. 3, 4 or 5
**Fig. 7** is a transaction slip issued by the system of Fig. 6. and
**Fig. 8** is a diagram of a system for use in remote transactions
**Fig. 9** is a diagram of a system in accordance with the fourth embodiment

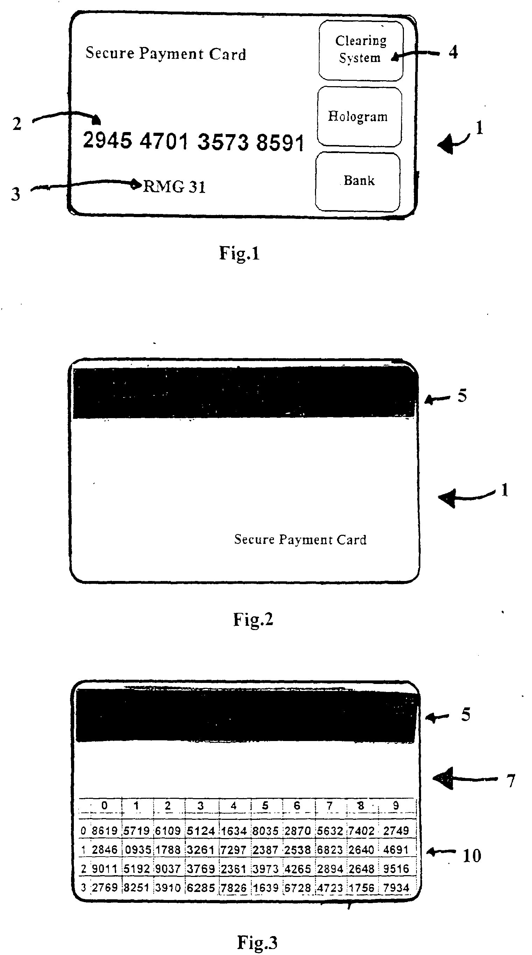

Referring to Fig. 1 the payment card 1 bears an account number 2, which may or may not be embossed on the card, and an identifying code 3. The card may in addition bear the usual insignia of the issuing bank and of the relevant clearing systems 4.

The card 1 need not include any means for identifying the card owner or accredited user (i.e. unlike normal cards, the name of the cardholder need be neither embossed nor printed on the card). The purpose of the identifying code 3 is therefore to allow the cardholder to identify their own card e.g. on its return from a merchant should the card leave the cardholder's possession or sight.

The identification code 3 may be the initials of the cardholder and their date of birth or some other significant number. It is not used in any transaction or for any verification of the card, and may be printed on the card by the issuing bank or may comprise a space on which the cardholder themselves can write a suitable recognition sign. It may, e.g. comprise a space of the same material as used in present cards to sign one's signature.

As shown in Fig. 2, the reverse of the card 1 has a conventional magnetic strip on which is written the account number 2 of the cardholder, but nothing else. The remainder of the reverse side of the card 1 may be entirely blank, or may carry advertising or other material. No provision need be provided for a specimen signature.

As stated above, there need be nothing on the card 1 to identify the cardholder (either by way of name, fingerprint, photograph, retinal scan or otherwise) and verification of the card for the authorisation of a transaction is achieved solely by a verification code.

An important feature of the card is that the verification code is variable and, further, in the present case, the same code cannot be reused. The determination of such a code is discussed below, and should be noted that the cardholder need not remember any number other than a PIN as usually associated with standard payment cards.

A five digit PIN is required to reduce the chances of consecutive uses repeating PIN's. To assist recall, abbreviations for the PIN digits known only to the cardholder (e.g. house number where borne, parts of date of birth, old office address, old house number, etc.) may be recorded on the card.

By virtue of the fact that used codes may not be used again, e.g. by a dishonest trader, the payment card 1 provides a very secure way of paying for goods or services, yet requires little extra effort on behalf of the cardholder over and above that which would normally be expected when using a payment card.

In order to provide a valid verification code, the cardholder first selects various digits from a series of digits provided to the cardholder by the Issuing bank (Figs 3, 4 and 5. on table 10, 20 or 30). These may be printed in any convenient fashion, including being printed on the reverse side of a standard payment card 7, or the bank may issue table 10, 20 or 30 in the form of a sticker or transfer which may be mounted on any other card held by the cardholder.

The standard card 7 may be used instead of the secure card 1 in situations where e.g. security is not considered a problem, and/or where only modest sums are involved, and/or where the trader has no means to verify the secure card's verification code, and/or where the speed of a transaction is paramount (e.g. at a supermarket checkout).

It may be arranged that the secure card 1 has a higher credit limit than the standard card 7, and the secure card may be used to load the standard card, i.e. increase its limit for a set time and by a set maximum amount. The secure card 1 and standard card 7 may or may not use the same account number or PIN.

It should be noted that the table 10, 20 or 30 could instead be provided merely on a piece of card or plastic, which may be the same size as a standard payment card for ease of storage in a wallet, etc., but which itself need not be a payment card.

The card 1 may also have an ICC embedded within it which could contain full details of the cardholder and the full grid of possible codes for self-verification on input.

### Example 1 - 8 digit code

A first embodiment for the verification code is shown at Fig.3. Table 10 contains a set of four digit strings in a 4 x 4 array, with columns 0-9 and rows 0-3. In use, the cardholder identifies one of the four digit strings by the day of the week, so that for a transaction on the 4^{th} of the month (day 04), the cardholder would identify the four digit string in row 0 column 4 i.e. "1634". In order to produce the eight digit verification code, the cardholder chooses three consecutive digits from the series of digits comprising the identified four digits "1634" together with the first digit on either side thereof i.e. "4" from column 3 and "8" from column 5. The cardholder must therefore choose three consecutive digits from "416348" i.e. one of 416,163,634 or 346. The digits chosen are used as the first three digits of the eight digit verification code.

The next three digits are a set of any three consecutive digits from the full string of 160 digits in the table 10, not including the three already selected (although two of the three may be the same). There are of course 160 digits in the full string as there are ten by four sets of four digits making a total of 10x4x4=160 digits.

Finally, the last two digits can be any two digits of the cardholder's five digit PIN, which may or may not be consecutive and may or may not be in the same order as in the PIN.

As an example, a verification code for use on the 4th day of a month by a cardholder having a PIN of "4126" may be: **16323641** which is obtained from:
a) 163 - A string of three consecutive digits from "4 1634 8" (the four digits in row 0, column 4 and the one digit either side thereof).
b) 236 - A consecutive string of three digits from the full string of 160 (10x4x4) digits, part of the 24th four digit code (row 2, column 4).
c) 41 - The first two digits of the cardholder's PIN "41267".

This procedure for determining the verification code produces a possible 5,110 combinations for any particular day

### Example 2 - 4 digit code

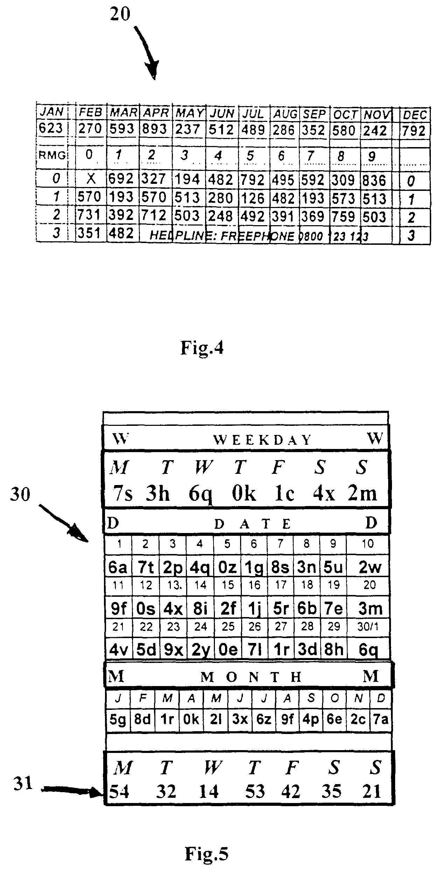

A second embodiment for the verification code is shown in Fig.4. In this embodiment, the four digit code is constructed as follows:-
[1] one digit from the box for the date of the transaction
[2] one digit from the box for the month
[3] two consecutive digits from the fixed PIN.

The verification code for 13 July would therefore be determined as follows:-
[1] row 1, column 3 (for day 13) shows "513" giving three possibilities of 5,1 or 3
[2] the box for July shows 489, giving 3 possibilities of 4, 8 or 9: and
[3] if the PIN is 12345, there are five possibilities of two consecutive digits: 12, 23, 34, 45 and 51 (the central computer would remember the five digit fixed PIN as a six digit number as 123451 so that five combinations of 2 can be achieved)

Therefore the verification code of 1851 would be valid for 13^{th} July, using this table. This procedure for determining the verification code produces a possible 45 combinations for any one day.

In view of the number of possible variations of digits making up the verification code provided by the two examples given above, it is extremely unlikely that the cardholder will ever use the same code twice. In view of this, the system may be arranged so that once a verification code has been used, it may never be used again.

Indeed should the unlikely event occur that a cardholder does use the same number again e.g. during the same day of a later month, then the system may allow the cardholder a second or even a third attempt, in which they must provide a different set of valid digits.

With the large number of combinations possible for each day of the month, the cardholder will generally have no problem in providing an unused number. At various times, however, e.g., after a set time period or a set number of transactions, the card issuer may issue a new table 10 or 20 of digits and/or the cardholder may change their PIN, so that the cardholder has a whole new set of possible verification codes to chose from.

### Example 3 - a five digit code

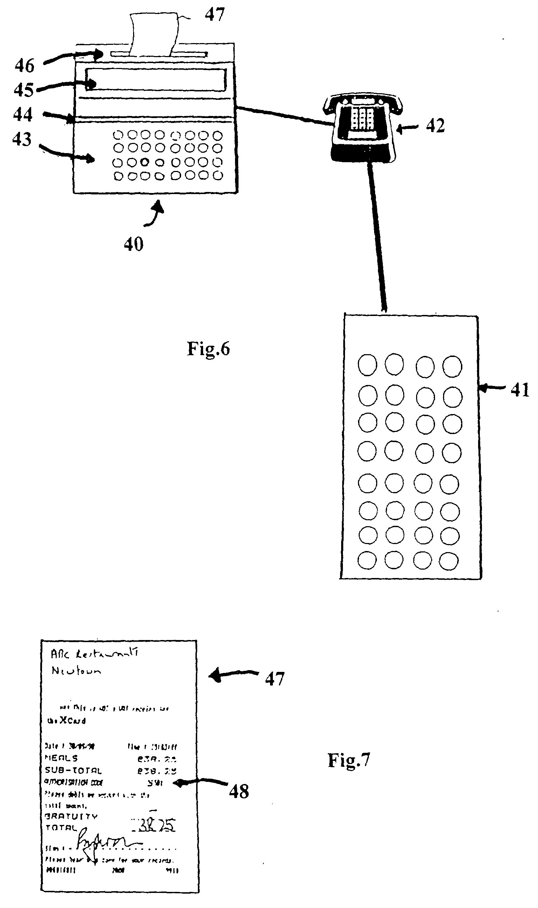

A third embodiment for the verification code is shown at Fig. 5 to produce a single verification code for each day and occasion of use from the table 30.

In order to provide a valid verification code, the cardholder selects the number indicated by the Weekday, Date and Month of the date of the transaction and adds two of the five PIN digits as indicated 31 by the weekday, for the first use of the card on that day. For the second use of the card on one day, the fixed PIN digits indicated for the following day are used, for the third use the PIN digits for the day after that are used and so on

For example, the valid code for the first use on Friday 24^{th} July for a cardholder with fixed PIN of 12345 would be 12642, formed as follows:-
1 from the Weekday grid
2 from the Date grid
6 from the Month grid
4 and 2 being the fourth and second digits from the 5 digit PIN as indicated for Friday.

The valid code for a second use on that day would be 12635, with the last two digits being the indicated PIN digits (3^{rd} & 5^{th})for Saturday.

The PIN element neither repeats either digit of the preceding use nor are they repeated on the next use during a single day.

In applications where more than seven uses per day were envisaged, one or more further rows of fixed PIN combinations could be added, or the system could accept, after seven consecutive correct entries, the repetition of the first as also the eighth use and so on.

In this Example 3, where a specific unique validation code is required, the system may provide for direct prompting of the required digits by the central computer in a randomly generated order. Thus, in the above illustration, the digits of 12642 represent digits for Weekday, Date and Month plus PIN4 and PIN2: these could be requested in random order e.g. M, PIN4, D, W, PIN2 giving the result of 64212 which would match the system requirements as to the required validation code despite its random construction. Such a system would not require any memory as to valid codes already used as the random nature of the question and answer preclude any possibility of planned repetition.

### Example 4: a 5 digit Code & unique payment card number

A fourth embodiment of the invention has the verification code constructed as in Example 3 being used as part of a payment card number, with the balance of the number being the bank identification number and the cardholder account number, plus if necessary a further digit to conform with a required numerical algorithm.

The third and fourth embodiments of the invention as exemplified above have the great advantage that the computer memory required to validate an input is extremely small, it being necessary only to have in memory less than 60 digits together with a precise "map" as to which is which, without the need to record or recall used numbers.

The same tables 10 20 or 30 may be provided to a number of different cardholders, since they will all have their own PIN numbers, or every cardholder may receive a randomly generated unique table.

The determination of a verification code in any of the above ways provides an extremely secure payment card system. For the first and second embodiments, a code previously used by the cardholder cannot be reused: in the third embodiment, where a specific code is required either as set out on the table 30 or as randomly prompted on-line from the table 30 components, the same code would never be repeated anyway except by chance, which would be neither noticed nor of any significance as the odds of it happening would remain at a constant 100,000 to one (with a five digit verification code).

The system therefore provides that should anyone, such as a dishonest employee of a merchant, attempt to reuse a verification code provided by the cardholder during a transaction, it would fail. Moreover, the interception of the code when, e.g. it is used over the telephone, e.g. over a mobile phone link or on the Internet would be of no use since it would not be validated for s subsequent transaction.

Should the card 1 and table 10 20 or 30 be stolen or lost together, then the card could still not be used, as a valid verification code could not be determined without the cardholder's PIN digits. In this latter regard, security may be increased by requiring e.g. the use of three of the PIN digits in the verification code giving a six digit verification code and a 1 in 1,000,000 chance of a correct guess.

A system using the secure card land the verification codes of Figs. 3, 4 or 5 is shown in diagrammatic form in Fig. 6.

The system comprises a merchant terminal 40 which may connect with a central clearing computer 41 of the card issuer via a telephone connection 42.

The terminal 40 includes a keyboard 43, a magnetic card-swipe reader 44, a display 45 and a printer 46 for printing a transaction slip 47 e.g. as in Fig. 7.

In a "card present" situation, the secure card 1 is swiped through the card reader 44, and the account number is transmitted to the clearing computer 41. Next, the verification code (determined as described above) is entered into the terminal 40 via the keypad 43, either by the cardholder or by the merchant who is given the code by the cardholder. This code is then also sent to the clearing computer 41, which checks as to whether the number is valid.

For each account number, the computer 41 will have the cardholder's details, as well as the digits from the table 10 20 or 30 assigned to the cardholder. When the computer 41 receives the verification code, it will check that the code is valid, based upon the methods of building up the code as described above.

When an authorisation code is received by the terminal 40, it prints out a transaction slip 47 as in Fig. 7, which lists the authorisation code 48 together with the amount of the transaction. The transaction is then complete. For additional security neither the verification code used nor the account number 2 of the cardholder need be printed out or retained in the memory of the terminal 40 (although, even if they were printed or stored, they would be of no use for any fraudulent purposes as explained above).

The cardholder may sign the transaction slip 47 or not, as they or the merchant may require, e.g. for reclaim purposes against the cardholder's company or as a confirmation of the acceptance of the transaction and to assist the merchant in rebutting any claim that the goods/services were not received by the cardholder. Recognition of the signature is not a part of the authorisation proceedings (as is the case for existing remote transactions) and the merchant will not have anything with which to compare it, unless a signature is provided on the secure card 1 which is possible if desired.

If the code is invalid, the user may be given a second or even a third chance to provide a valid code. If the code remains invalid various suitable steps may be taken, e.g. the invalidation of the card and the alerting of appropriate authorities, etc. The system may give more or less attempts to provide a valid code.

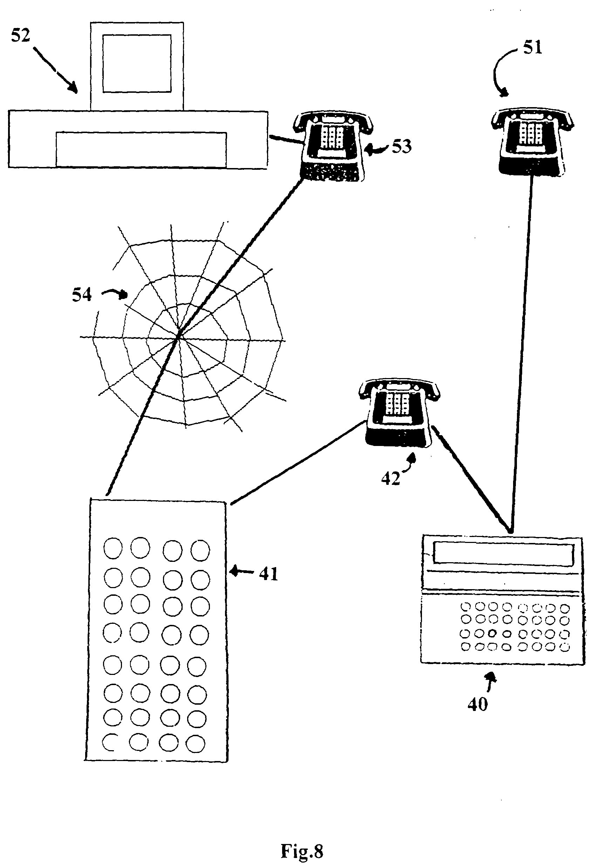

A system for transactions over the telephone or on the Internet would be as shown in Fig 8. The account number and verification code are either given over the telephone 51 to a remote merchant 40, or through a computer 52 linked by telephone 53 to a website 54, in the case of the Internet. In either case, the remote merchant 40 or the website 54 must receive an authorisation code from a clearing computer 41 before the transaction can be completed.

As most remote transactions will be carried out from a static base (e.g. from home or the office), the cardholder may keep a specific note of the codes which have been used for which transactions (to be retained at the static base and not carried in a wallet or, otherwise with the card), as a record pending receipt of goods in all cases, and to ensure that there is no repetition of codes for the first and second embodiments (unnecessary for the third and fourth embodiments, as a specific unique verification code is required on each and every occasion).

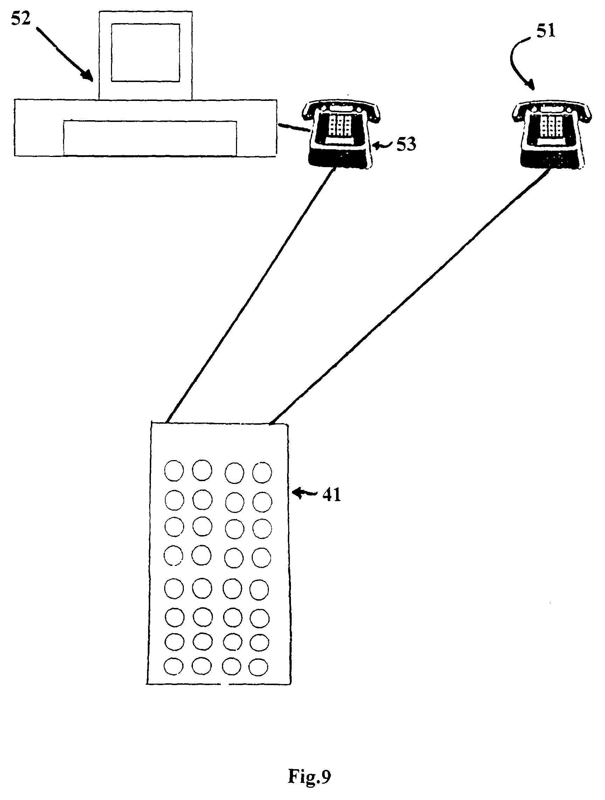

The fourth embodiment, involving a specific payment card number for each occasion, would proceed as shown in Fig 8, except that it would be preceded as shown on Fig.9 by the cardholder contacting the central computer 41 by telephone 51 or through a personal computer 52 telephone link 53 to input the specific verification code (in standard order or as prompted) which, together with a further digit confirmed by the central computer concerning the numerical algorithm digit would make up a unique payment card number when added to the numbers for the card issuer and the account number therewith which would be fixed and recorded in a convenient place. This payment card number would then be used as illustrated in Fig. 8.

In the case of the fourth embodiment, the clearing computer may be an issuing bank or it may be a Trusted Third Party with whom conventional card details are securely lodged for reclaim by the TTP for any remote purchases made with the unique payment card number. In this manner, for example, a Debit card holder may effectively "use" a Debit card for remote purchases, it being eventually debited with the cost of purchases, by lodging details with the TTP and being issued with a card 1 and table 30 for remote purchases in connection with the fourth embodiment of the invention, without ever exposing the debit card numbers to remote third parties (other than the TTP), and also gain the benefit of purchasing with Consumer Credit Act protection.

When receiving the secure card 1 from the card issuer, e.g. through the post, the card may be provided by one mailing, the table 10 20 or 30 by another mailing and the PIN by a still further mailing. The PIN may be changed by the user on first use or at any time thereafter by conventional secure procedures.

The above are only specific embodiments of the present invention and variations and modifications are also possible.

When used for example on the Internet, the goods or service provider with which the transaction is made does not necessarily have to know the name of the purchaser, only that their bill will be met by the payment card issuer, and it may be that the cardholder would prefer not to provide any personal details, such as their address, even when purchasing goods that must be delivered. In this case, in order to preserve anonymity, the card issuer may have one or more delivery stations to which goods may be sent by e.g. an Internet merchant, and which may then be passed on to the purchaser from these stations by the card issuer

In another variation, the merchant terminal may include a keypad for use by the cardholder to input their verification code or the whole payment card number including the verification code. The merchant would then never see the verification code or as the case may be the payment card number, only the authorisation 48. The keypad may e.g. be provided as a separate pad from the terminal 40, connected to it by e.g. a flexible cable.

## Claims

1. A payment card having associated therewith a payment card number and a plurality of possible verification codes, the cardholder being required to provide and input a valid verification code or codes, being numerical or alphabetical or a mixture of both and as previously communicated to the cardholder, in order to verify a transaction, the verification code or codes which are valid on a particular occasion varying in accordance with specific criteria

2. A payment card system in which a payment card has associated therewith a payment card number and a plurality of possible verification codes, the cardholder being required to provide and input a valid verification code or codes, being numerical or alphabetical or a mixture of both and as previously communicated to the cardholder, in order to verify a transaction, the verification code or codes which are valid on a particular occasion varying in accordance with specific criteria

3. A payment card or payment card system comprising a central computer and one or more remote terminals or telephone locations able to communicate with the central computer, in which a payment card has associated therewith a payment card number and a plurality of possible verification codes, the cardholder being required to provide and input a valid verification code or codes, being numerical or alphabetical or a mixture of both and as previously communicated to the cardholder, in order to verify a transaction, the verification code or codes which are valid on a particular occasion varying in accordance with specific criteria, wherein the central computer includes means for determining whether the particular verification code input by the cardholder via the remote location to the central computer is valid or invalid and so informing the remote location

4. A payment card or payment card system as claimed in any preceding claim, wherein the verification codes include at least an element derived from a fixed PIN to be remembered by the customer

5. A payment card or payment card system as claimed in claim **4** wherein the verification codes are contained in a series of grids communicated to the cardholder with provision for a unique verification code to be applied for each occasion of use, determined by the day of the week, date, month and use number on that day, and being derived in part by specific numbers associated therewith and in part by two or more indicated numbers from a fixed PIN

6. A payment card or payment card system as claimed in any preceding claim wherein the codes comprising the specific verification code determined as set out therein are provided by input by the cardholder into a remote terminal or telephone system connected to a central computer in the specific order randomly generated and prompted by the central computer

7. A payment card or payment card system as claimed in claim **5 or 6** wherein a part of or the whole of the specific verification code determined as set out therein itself forms part of the payment card number associated with the payment card for use on that specific occasion

8. A payment card or payment card system as claimed in claim **7** wherein subsequent to the input of a valid verification code including letters the central computer provides digits to form part of the payment card number instead of the verification code itself.

9. A payment card or payment card system as claimed in claim **7 or 8** wherein the last digit forming part of the payment card number associated with the payment card is is supplied by the central computer subsequent to the input by the cardholder of the specific required verification code and is determined such that the payment card number completed thereby conforms to any numerical algorithm or convention for payment card numbers in force for the time being

10. A payment card or payment card system as claimed in any preceding claim wherein the verification codes are supplied in electronic form on a Smartcard, wherein the Smartcard contains all necessary data to determine whether a verification code provided by the customer is valid
